Europäisches Patentamt

European Patent Office

Office européen des brevets

(19)

(11) Numéro de publication : **0 093 646**
**B1**

(12) **FASCICULE DE BREVET EUROPÉEN**

(45) Date de publication du fascicule du brevet :
30.07.86

(21) Numéro de dépôt : 83400818.7

(22) Date de dépôt : 26.04.83

(51) Int. Cl.⁴ : **F 28 D  7/14, A 01 J  9/04**

(54) **Installation de refroidissement du lait.**

(30) Priorité : 30.04.82 FR 8207529
01.09.82 FR 8214939

(43) Date de publication de la demande :
09.11.83 Bulletin 83/45

(45) Mention de la délivrance du brevet :
30.07.86 Bulletin 86/31

(84) Etats contractants désignés :
AT BE CH DE FR GB IT LI LU NL SE

(56) Documents cités :
DE-A- 1 444 378
DE-C-   251 583
FR-A- 2 370 424
GB-A- 1 008 689
GB-A- 1 338 495

(73) Titulaire : **TECHNOLOGIES NOUVELLES**
**B.P. 27, Z.I. Pen Méné**
**F-56520 Guidel (FR)**

(72) Inventeur : **Cleren, Paul**
**B.P. 92 Roscasquen**
**F-29130 Quimperlé (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

EP 0 093 646 B1

## Description

La présente invention concerne une installation de refroidissement du lait qui comporte un échangeur tubulaire pour réaliser l'échange thermique avec le lait à refroidir et de l'eau froide.

Cette installation est destinée à refroidir du lait de traite des vaches avant de le stocker dans une cuve réfrigérée.

Les installations de ce genre comprennent une pompe destinée à envoyer le lait provenant de la traite dans un échangeur thermique où le lait est refroidi, par échange thermique avec de l'eau froide, avant d'être envoyé dans une cuve de stockage réfrigérée à environ 4 °C.

On sait que le lait constitue une denrée alimentaire très fragile dans laquelle le développement microbien se multiplie d'une manière très importante entre la température de la traite de la vache, soit 37 °C, et la température de 10 °C.

Il est donc essentiel que, dans les installations de ce genre, l'échangeur thermique puisse abaisser aussi rapidement que possible la température du lait de la traite en dessous de la température de 10 °C.

En outre, il est impératif que le refroidissement du lait dans l'échangeur se fasse en douceur et sans produire ce que l'on appelle un « matraquage » du lait, c'est-à-dire un traitement brutal qui conduit à une lipolyse du lait. Cette lipolyse, qui est due à une pénétration d'air dans le lait, non seulement donne un goût de rance au beurre, mais aussi favorise le développement de spicotrophes dans le lait froid.

Ceci revêt donc une importance déterminante si l'on considère qu'à l'heure actuelle plus de 90 % du lait trait à la ferme est réfrigéré à une température de 2 à 4 °C pour une durée de stockage de 48 heures et plus.

Les échangeurs de chaleur utilisés actuellement pour le refroidissement du lait sont soit des échangeurs à plaques, soit des échangeurs tubulaires.

Les échangeurs à plaques comprennent plusieurs plaques d'échange de chaleur, en acier inoxydable, qui permettent de refroidir un fluide, par exemple du lait, par écoulement alterné de ce fluide avec un autre fluide, par exemple de l'eau, de chaque côté des plaques de l'échangeur.

Les échangeurs à plaques utilisent des plaques de forme complexe séparées entre elles par des joints d'étanchéité. Ces plaques forment des cavités et des recoins où peuvent se loger des saletés et obstruer ainsi l'échangeur. Il est donc obligatoire que les échangeurs à plaques soient équipés d'un filtre, ce qui est néfaste au lait, car toutes les particules retenues dans le filtre contaminent et ensemencent le lait et freinent aussi son passage. Les échangeurs à plaques sont démontables, ce qui permet de nettoyer les plaques, mais leur remontage après nettoyage n'est pas toujours aisé.

Il faut aussi noter que les échangeurs à plaques, du fait de leurs cavités et recoins, tendent à « matraquer » le lait, avec les conséquences néfastes qui en résultent.

Les échangeurs tubulaires comprennent généralement deux tubes coaxiaux en acier inoxydable ; à savoir un tube intérieur pour le lait et un tube extérieur pour le passage de l'eau dans l'espace compris entre les deux tubes.

Ces échangeurs présentent une configuration en épingle à cheveux et comprennent des tronçons droits de grande longueur (par exemple de 2,5 m à 3 m) reliés entre eux par des coudes. Pour maintenir un écartement constant des tubes coaxiaux dans les tronçons droits, il est nécessaire de prrévoir des entretoises soudées entre les tubes.

L'inconvénient principal de ces échangeurs tubulaires connus est que leur rendement chute très sensiblement en cours d'utilisation.

En effet, du fait que ces échangeurs ne sont pas démontables, il n'est pas possible de décaper parfaitement l'extérieur du tube intérieur pour éliminer le tartre qui s'y dépose peu à peu et qui empêche un bon échange thermique entre l'eau et le lait.

En outre ces échangeurs tubulaires créent un « matraquage » du lait au niveau des coudes du tube intérieur.

La présente invention vise à éviter les inconvénients précités en proposant une installation de refroidissement comportant un échangeur tubulaire de structure très simple et régulière qui permet un bon échange thermique entre les deux fluides.

Un tel échangeur tubulaire permet de refroidir le lait en douceur sans le « matraquer ». En outre, du fait de sa structure régulière sans recoins ni cavités, il empêche que les saletés éventuelles ne puissent l'obstruer et ne nécessite donc pas l'emploi d'un filtre.

L'installation de refroidissement du lait de l'invention, permet d'abaisser rapidement la température du lait de traite en dessous de 10 °C sans « matraquer » le lait, ni le contaminer par d'éventuelles saletés entraînées dans le lait de traite.

Elle permet également de récupérer, à la sortie de l'échangeur, de l'eau réchauffée pouvant être utilisée par exemple pour l'alimentation des animaux.

L'installation de refroidissement du lait selon l'invention est du type comprenant une pompe apte à envoyer le lait de la traite dans un échangeur thermique où ce lait est refroidi par de l'eau froide avant d'être stocké dans une cuve réfrigérée.

L'installation conforme à la présente invention est caractérisée par le fait

qu'elle comprend un clapet anti-retour sur la conduite d'amenée du lait à l'échangeur de chaleur,

que cet échangeur de chaleur est un échangeur tubulaire comprenant un tube intérieur en acier inoxydable, agencé en spirale et destiné à la circulation du lait et un tube extérieur en matière plastique souple, disposé autour du tube intérieur et destiné à la circulation de l'eau froide dans l'espace compris entre les deux tubes, la circulation du lait s'effectuant de haut en bas dans l'échangeur,

que le lait provenant de la traite est d'abord recueilli dans un récipient de transfert disposé en amont de la pompe à lait et le volume en lait de l'échangeur tubulaire correspond sensiblement au volume en lait du récipient de transfert,

que la conduite d'évacuation du lait, de l'échangeur à la cuve réfrigérée, est une conduite descendante destinée à amener directement par gravité dans la cuve réfrigérée le lait refroidi prélevé au bas de l'échangeur, et

qu'elle comprend en outre une prise d'air montée sur la conduite d'amenée du lait et en haut de l'échangeur, ladite prise d'air pouvant être maintenue soit en position fermée pour le refroidissement du lait, soit en position ouverte pour la vidange de l'échangeur, à la fin de la traite et à la fin du lavage, ainsi que

des moyens de contrôle aptes à commander le fonctionnement de la pompe à lait par intermittence et, pendant l'arrêt de la pompe à lait et la stagnation momentanée du lait dans l'échangeur due à la présence du clapet anti-retour sur la conduite d'amenée, au moins une injection d'eau froide de bas en haut dans l'échangeur.

Selon une autre caractéristique de l'invention, le tube intérieur et le tube extérieur sont cintrés simultanément en forme de spirale.

Le programmateur peut piloter soit une électrovanne commandant l'arrivée d'eau froide du secteur, soit une pompe à eau reliée à une réserve d'eau maintenue à niveau constant.

Bien entendu, le programmateur pourra être réglé pour permettre, si on le désire, une circulation continue de l'eau de refroidissement.

D'autres caractéristiques et avantages de l'invention résulteront de la description détaillée qui suit et qui se réfère aux dessins annexés, donnés uniquement à titre illustratif, sur lesquels :

la figure 1 est une vue schématique d'une installation de refroidissement de lait de traite selon l'invention ;

la figure 2 est une vue partielle de l'échangeur tubulaire de l'installation de la figure 1 ;

la figure 3 montre schématiquement la liaison des tubes intérieur et extérieur aux deux extrémités de l'échangeur tubulaire ;

la figure 4 représente, en position fermée, une vanne à papillon utilisée dans l'installation de la figure 1 ;

la figure 5 représente, en position ouverte, la vanne de la figure 4 ;

la figure 6 est une vue en coupe de la prise d'air de l'installation de la figure 1 ;

la figure 7 est une vue en coupe du couvercle de la prise d'air de la figure 6, le couvercle étant représenté avant sa mise en forme ;

la figure 8 est une vue en coupe du clapet anti-retour de l'installation de la figure 1 ; et

la figure 9 est une vue de dessus de la membrane du clapet de la figure 8.

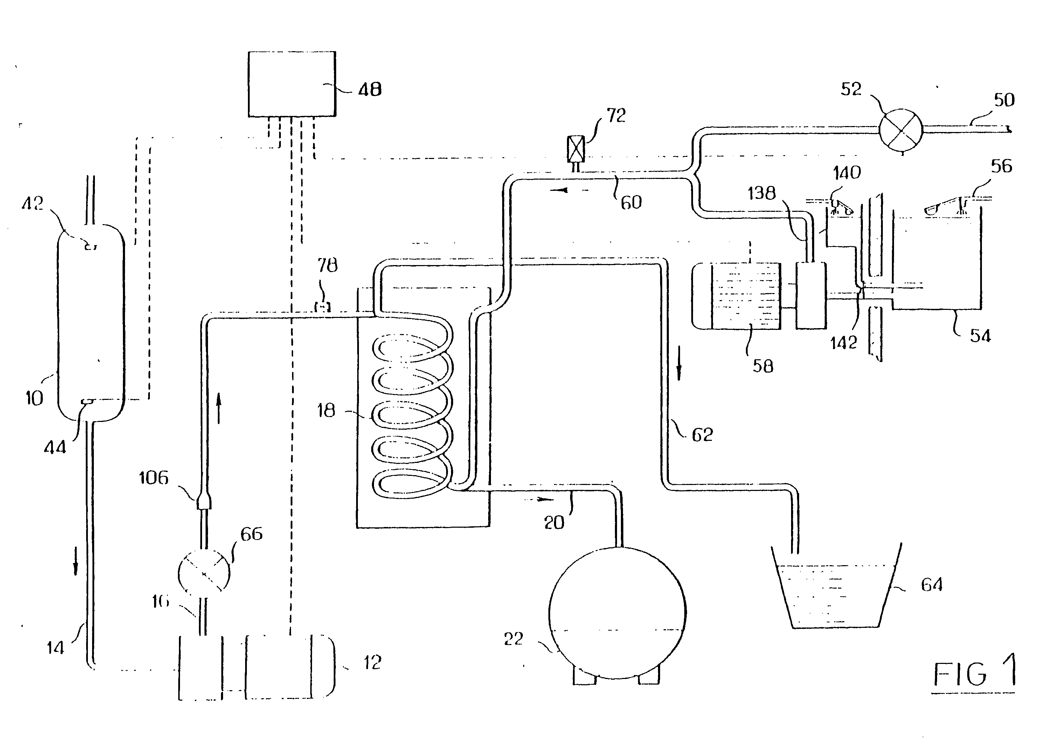

L'installation représentée sur la figure 1 comprend un récipient de transfert 10 destiné à recueillir le lait provenant de la traite des vaches, la température du lait étant d'environ 37 °C. Le lait contenu dans le récipient 10 est aspiré par une pompe 12, par exemple une pompe à palette, qui est disposée à un niveau inférieur à celui du récipient 10 et qui est reliée à ce dernier par une canalisation 14. Le lait est envoyé par la pompe 12 dans une canalisation 16 qui aboutit à un échangeur tubulaire 18 où le lait est refroidi par échange avec de l'eau froide, avant d'être envoyé par une canalisation 20 dans une cuve de stockage 22 réfrigérée à une température de 2 à 4 °C.

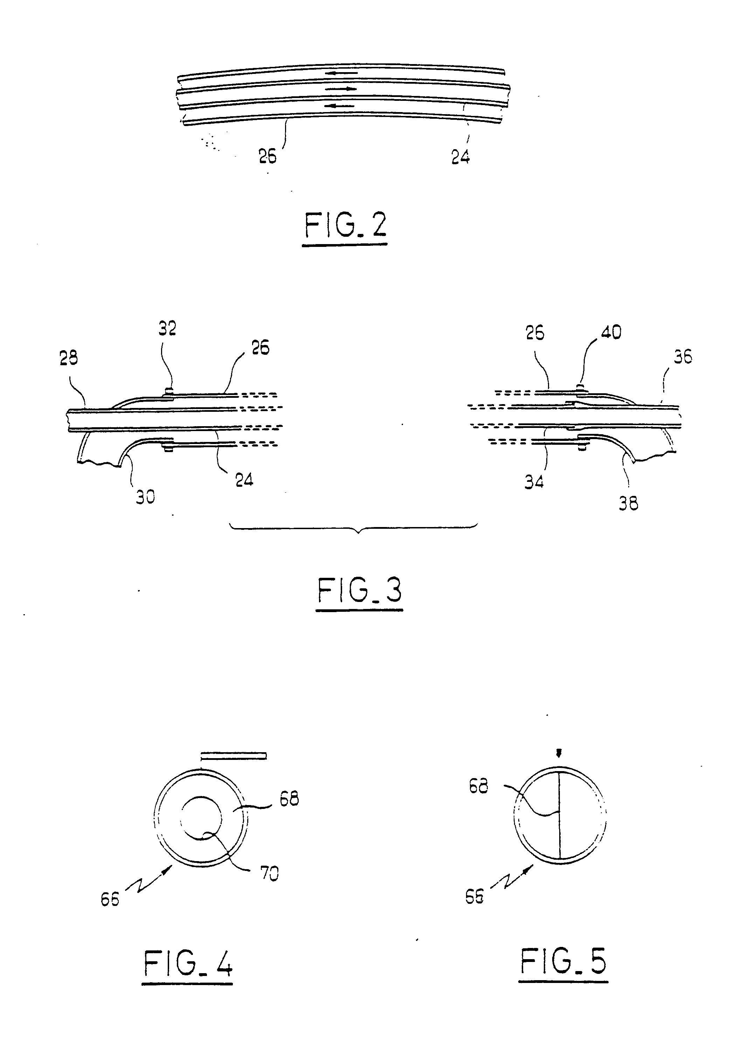

Comme représenté plus particulièrement à la figure 2, l'échangeur comprend un tube intérieur 24 en acier inoxydable de qualité alimentaire, agencé en spirale et destiné à la circulation du lait à refroidir, et un tube extérieur 26 en matière plastique souple, disposé autour d'un tube intérieur 24 et destiné à la circulation de l'eau de refroidissement dans l'espace compris entre les deux tubes.

Le tube extérieur peut être constitué en toute matière plastique souple, apte à adopter la forme en spirale du tube intérieur qui est rigide, et de résistance suffisante pour résister à la pression de l'eau.

Ce tube extérieur sera ainsi avantageusement réalisé en polyamide et pourra éventuellement comporter une armature intérieure de renforcement.

Contrairement aux échangeurs tubulaires connus, l'échangeur tubulaire de l'invention ne nécessite pas d'entretoises entre les tubes intérieur et extérieur étant donné que la pression de l'eau crée automatiquement le centrage du tube extérieur souple par rapport au tube intérieur rigide qui se trouvent ainsi coaxiaux.

Les tubes pourront avoir toute section appropriée en fonction des caractéristiques de l'installation considérée. On aura bien entendu avantage à utiliser un tube intérieur de faible épaisseur pour améliorer l'échange thermique. Il faudra cependant tenir compte du fait que cette épaisseur permette un cintrage adéquat du tube à la forme en spirale désirée.

A cet égard, on a trouvé qu'il était souhaitable de cintrer simultanément le tube intérieur et le tube extérieur à la forme en spirale, car cela évitait tout risque de plissage du tube intérieur en acier inoxydable.

Comme représenté sur la figure 3, l'une des extrémités 28 du tube 24 passe à travers une crosse 30 sur laquelle vient s'emmancher et se fixer par un collier 32 l'une des extrémités du tube 26. L'autre extrémité 34 du tube 24 est filetée pour être vissée dans un tube 36 de raccordement. Ce tube 36 passe à travers une crosse 38 analogue à la crosse 30, qui est destinée à recevoir l'autre extrémité du tube 26, qui est maintenue et fixée sur cette crosse par un collier 40.

Comme représenté sur la figure 1, le récipient de transfert 10 comprend un détecteur 42 de niveau haut et un détecteur 44 de niveau bas aptes à commander respectivement la mise en marche et l'arrêt de la pompe 12, en sorte que cette dernière n'est actionnée qu'à partir du moment où le récipient 10 est plein jusqu'au moment où il est pratiquement vide. Ceci permet d'envoyer le lait en discontinu dans l'échangeur 18.

Le volume en lait de l'échangeur tubulaire 18 est déterminé pour correspondre sensiblement au volume en lait du récipient 10 en sorte que toute la quantité de lait contenue dans le récipient 10 et envoyée par la pompe 12 se retrouve dans l'échangeur 18 où elle subit alors un traitement de refroidissement.

Comme représenté sur la figure 1, le lait parcourt l'échangeur 18 de haut en bas suivant un trajet en spirale.

Le lait stagne momentanément dans l'échangeur où il y subit un refroidissement par de l'eau froide.

Le refroidissement sera effectué de préférence en discontinu, par une ou plusieurs injections d'eau froide dans l'échangeur, bien qu'un refroidissement continu entre également dans le cadre de l'invention.

L'installation comprend à cet effet un programmateur 48 apte à commander, pendant l'arrêt de la pompe à lait 12 et la stagnation momentanée du lait dans l'échangeur, au moins une injection d'eau froide dans l'échangeur.

Dans le cas où l'eau froide est de l'eau du secteur arrivant par une canalisation 50, le programmateur pilotera une électrovanne 52 montée sur cette canalisation.

On aura toutefois avantage à utiliser de l'eau froide contenue dans une réserve extérieure 54, formant capacité tampon, et maintenue à un niveau constant par un robinet flotteur 56. Cette réserve pourra être disposée en plein nord pour être la plus froide possible.

Dans ce cas, le programmateur pilotera une pompe à eau 58 apte à amener l'eau de la réserve 54 dans l'échangeur 18 au moyen d'une canalisation 60.

L'eau réchauffée recueillie à la sortie de l'échangeur 18 sera par exemple envoyée par une canalisation 62 à un abreuvoir 64 pour les animaux.

On remarquera que l'installation ci-dessus ne nécessite pas de filtre pour le lait. Le lait réfrigéré contenu dans la cuve réfrigérée 22 sera prélevé au moyen d'une canne de prélèvement plongeant au fond de la cuve en sorte que les saletés éventuelles ne seront pas aspirées par cette canne.

L'installation de la figure 1 comprend en outre une vanne à papillon 66, disposée entre la pompe 12 et l'échangeur 18, dont le papillon 68 est pourvu d'une ouverture centrale 70 (cf. fig. 4).

Pendant le fonctionnement normal de l'installation pour le refroidissement du lait, la vanne sera maintenue en position ouverte (cf. fig. 5). Pendant le fonctionnement de nettoyage de l'installation, la vanne sera maintenue en position fermée (cf. fig. 4) de manière que l'étranglement créé par l'ouverture centrale 70 augmente la pression du liquide de lavage.

En effet, cet étranglement n'est pas souhaitable en fonctionnement normal, car il risque alors de créer un « matraquage » du lait au niveau de l'étranglement.

L'installation comprend en outre un clapet de décompression 72 disposé au point le plus haut du circuit d'eau pour empêcher le siphonnage.

L'installation de la figure 1 permet de refroidir très rapidement le lait, de préférence en discontinu, le lait refroidi étant introduit ensuite dans la cuve réfrigérée, sans risque de provoquer une remontée de la température du lait de la cuve réfrigérée au-dessus de la température critique de 10 ºC.

A titre d'exemple pour une durée de fonctionnement de la pompe d'une minute, et par conséquent une durée de stagnation correspondante du lait dans l'échangeur, on pourra effectuer plusieurs injections successives d'eau froide.

Le programmateur pourra être réglé à volonté pour établir une circulation continue et/ou discontinue de l'eau.

L'installation de l'invention permet de diminuer la consommation d'eau de refroidissement par rapport aux installation connues. L'eau de refroidissement proviendra de préférence d'une réserve d'eau extérieure ce qui permettra d'avoir de l'eau fraîche toute l'année et de l'eau glacée en période de grand froid. Il en résultera alors un refroidissement instantané du lait à sa température de stockage finale. L'utilisation d'une réserve d'eau permet en outre de pallier le manque de pression d'eau que l'on rencontre souvent dans les fermes. Pour favoriser le refroidissement de la réserve d'eau, celle-ci sera avantageusement recouverte d'un couvercle non étanche, par exemple d'un tissu.

La canalisation 20 est constituée par une conduite descendante destinée à amener directement par gravité dans la cuve réfrigérée 22 le lait refroidi prélevé au bas de l'échangeur 18. Pour permettre l'évacuation du lait, l'installation comporte en outre une prise d'air 78 montée sur le tube de circulation du lait et en haut de l'échangeur 18, cette prise pouvant être maintenue soit en position fermée pour le refroidissement du lait, soit en position ouverte pour la vidange de l'échangeur.

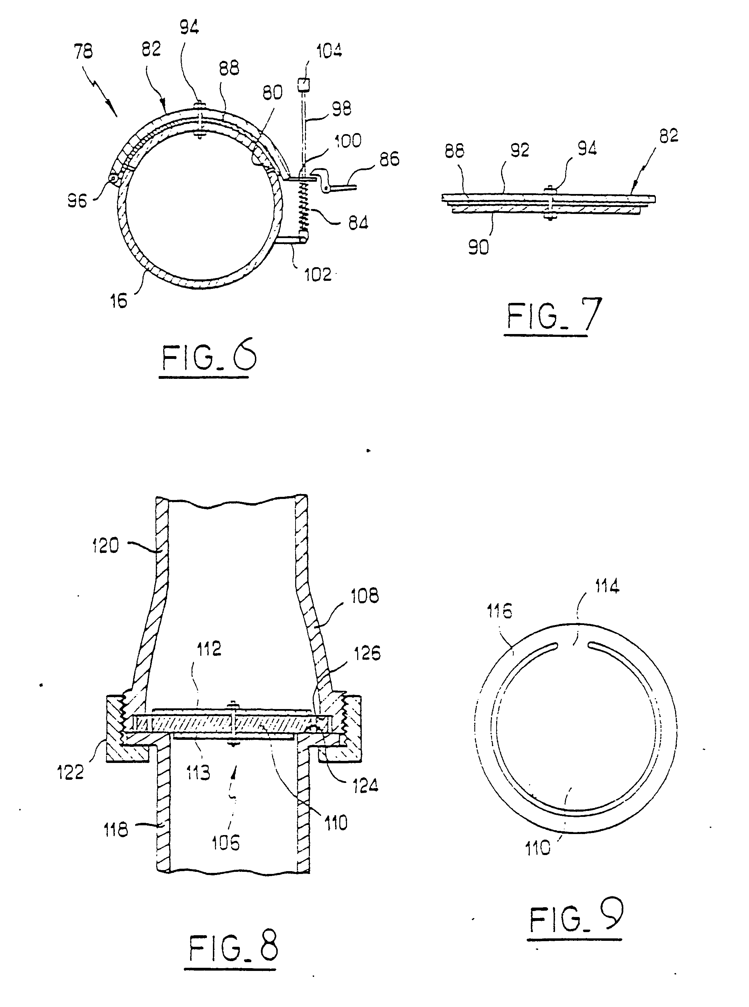

La prise d'air 78 sera maintenant décrite plus particulièrement en référence aux figures 7 et 8. La prise d'air 78 est montée sur le point le plus haut de la canalisation 16 qui conduit le lait depuis la pompe 12 jusqu'à l'échangeur 18. La prise d'air 78 comprend une ouverture circulaire 80 ménagée dans la canalisation 16 et ayant un diamètre sensiblement égal au diamètre intérieur de cette canalisation, un couvercle de fermeture 82 monté pivotant sur la canalisation 16, un ressort élastique 84 tendant à rappeler le couvercle vers sa position d'ouverture, et un organe de verrouillage 86 pour maintenir le couvercle en position de fermeture. Comme représenté sur la figure 7, le couvercle 82 présente une forme incurvée à contour circulaire et comporte une plaque de caoutchouc 88 maintenue entre une plaque intérieure 90 en acier inoxydable de dimension inférieure et une plaque extérieure 92 en acier inoxydable de dimension supérieure. Les plaques 88, 90 et 92 sont maintenues ensemble par une fixation 94 et sont incurvées de telle sorte que la face intérieure de la plaque 90 présente un rayon de courbure égal à celui de la surface intérieure de la canalisation 16. Comme représenté sur la figure 7, le couvercle 82 pivote autour d'un axe 96 et le ressort 84 est enfilé autour d'une tige 98 qui passe à travers un rebord 100 du couvercle, et dont une extrémité est articulée sur un support 102 solidaire de la canalisation 16 et dont l'autre extrémité est pourvue d'une butée 104. En position de verrouillage, l'organe de verrouillage 86 maintient le couvercle en position fermée et, dès que l'organe de verrouillage est actionné, le ressort 84 provoque une ouverture franche et instantanée du couvercle 82 et par conséquent l'arrivée d'air dans la canalisation 16. Cette arrivée d'air permet de vidanger immédiatement le contenu de l'échangeur de chaleur. On comprendra par conséquent que, pendant tout le refroidissement du lait, la prise d'air 78 sera maintenue en position fermée. Une fois la traite terminée, on ouvrira la prise d'air 78 pour vidanger le lait puis on fermera à nouveau cette prise d'air pour effectuer le lavage de l'installation. En fin de lavage, on pourra ajouter un désinfectant à l'eau de lavage en sorte que ce désinfectant puisse exercer son action entre deux traites consécutives. La prise d'air 78 pourra ensuite être ouverte pour vidanger le mélange eau et désinfectant.

L'installation comporte un clapet anti-retour 106 placé en aval de la vanne à papillon 66. Ce clapet anti-retour 106 est disposé à l'intérieur d'une section évasée 108 de la canalisation 16. Comme représenté sur la figure 9, le clapet anti-retour 106 est un clapet à membrane comprenant une plaque circulaire 110 de caoutchouc renforcée par deux plaques circulaires 112 et 113 en acier inoxydable et reliée par un pont de matière 114 et une partie annulaire 116. La partie annulaire 116 est destinée à faire joint d'étanchéité entre une section amont 118 et une section aval 120 de la canalisation 16, ces deux sections étant reliées entre elles au moyen d'une bague filetée 122. Comme représenté sur la figure 9, la partie annulaire 116 est destinée à être serrée entre des épaulements respectifs 124 et 126 des sections 118 et 120, tandis que la plaque circulaire 110 formant membrane, est destinée à venir s'appliquer contre l'épaulement annulaire 124 de la section 118. On remarquera que la section 108 est évasée, de manière à supprimer tout étranglement au niveau du clapet 106.

Pour éviter qu'en période de froid intense l'eau de la réserve 54 se prenne en glace et empêche le fonctionnement de l'installation, la présente invention prévoit une réserve d'eau intérieure 138 maintenue à niveau constant par un robinet à flotteur 140 et communiquant par une conduite 142 avec la réserve extérieure 54. La réserve d'eau intérieure 138, qui est maintenue à la température ambiante intérieure, forme ainsi une capacité tampon et permet à la réserve d'eau extérieure 54 de fonctionner quelle que soit la température extérieure.

**Revendications**

1. Installation de refroidissement du lait, comportant une pompe (12) pour envoyer le lait provenant de la traite dans un échangeur de chaleur (18) où le lait est refroidi par de l'eau froide avant d'être stocké dans une cuve réfrigérée (22) caractérisée par le fait

qu'elle comprend un clapet anti-retour (106) sur la conduite (16) d'amenée du lait à l'échangeur de chaleur (18),

que cet échangeur de chaleur est un échangeur tubulaire comprenant un tube intérieur (24) en acier inoxydable, agencé en spirale et destiné à la circulation du lait et un tube extérieur (26) en matière plastique souple, disposé autour du tube intérieur et destiné à la circulation de l'eau froide dans l'espace compris entre les deux tubes, la circulation du lait s'effectuant de haut en bas dans l'échangeur,

que le lait provenant de la traite est d'abord recueilli dans un récipient de transfert (10) disposé en amont de la pompe à lait (12) et le volume en lait de l'échangeur tubulaire (18) correspond sensiblement au volume en lait du récipient de transfert (10),

que la conduite (20) d'évacuation du lait, de l'échangeur (18) à la cuve réfrigérée (22), est une conduite descendante destinée à amener directement par gravité dans la cuve réfrigérée (22) le lait refroidi prélevé au bas de l'échangeur (18), et

qu'elle comprend en outre une prise d'air (78) montée sur la conduite (16) d'amenée du lait et en haut de l'échangeur, ladite prise d'air pouvant être maintenue soit en position fermée pour le refroidissement du lait, soit en position ouverte pour la vidange de l'échangeur, à la fin de la traite et à la fin du lavage, ainsi que

des moyens de contrôle (42, 44, 48) aptes à commander le fonctionnement de la pompe à lait par intermittence et, pendant l'arrêt de la pompe à lait (12) et la stagnation momentanée du lait dans l'échangeur (18) due à la présence du clapet anti-retour (106) sur la conduite d'amenée (16), au moins une injection d'eau froide de bas en haut dans l'échangeur.

2. Installation selon la revendication 1, caractérisée par le fait que le récipient de transfert (10) comprend un détecteur (42) de niveau haut et un détecteur (44) de niveau bas aptes à commander respectivement la mise en marche et l'arrêt de la pompe (12).

3. Installation selon l'une des revendications 1 et 2, caractérisée par le fait que les moyens de contrôle (48) pilotent une électrovanne (52) commandant l'arrivée d'eau froide du secteur.

4. Installation selon l'une des revendications 1 et 2, caractérisée par le fait que les moyens de contrôle (48) pilotent une pompe à eau (58) reliée à une réserve d'eau (54) maintenue à niveau constant.

5. Installation selon l'une des revendications 1 à 4, caractérisée par le fait que le tube intérieur (24) et le tube extérieur (26) sont cintrés simultanément.

## Claims

1. Apparatus for cooling milk, comprising a pump (12) for sending the milk coming from milking into a heat exchanger (18) where the milk is cooled by cold water before being stored in a refrigerated tank (22) characterised by the fact

that it comprises a non-return valve (106) on the pipe (16) supplying milk to the heat exchanger (18),

that this heat exchanger is a tubular exchanger comprising an inner stainless steel tube (24), arranged in a coil and intended for the circulation of the milk and an outer tube (26) of flexible plastics material, arranged around the inner tube and intended for the circulation of cold water in the space comprised between the two tubes, the milk circulating from the top towards the bottom of the exchanger,

that the milk coming from milking is first of all collected in a transfer vessel (10) arranged upstream of the milk pump (12) and the volume of milk in the tubular exchanger (18) corresponds substantially to the volume of milk in the transfer vessel (10),

that the pipe (20) for the discharge of milk from the exchanger (18) to the refrigerated tank (22) is a downpipe intended to supply the cooled milk taken from the bottom of the exchanger (18) directly by gravity to the refrigerated tank (22) and

that it also comprises an air intake (78) mounted on the milk supply pipe (16) and at the top of the exchanger, the said air intake being able to be kept either in the closed position for the cooling of the milk, or in the open position for the emptying of the exchanger, at the end of milking and at the end of washing as well as

control means (42, 44, 48) able to control the operation of the milk pump intermittently and, during the stoppage of the milk pump (12) and the momentary stagnation of the milk in the exchanger (18) due to the presence of the non-return valve (106) on the supply pipe (16), at least one injection of cold water in an upwards direction into the exchanger.

2. Apparatus according to Claim 1 characterised by the fact that the transfer vessel (10) comprises an upper level detector (42) and a lower level detector (44) able to control the starting and stopping respectively of the pump (12).

3. Apparatus according to one of Claims 1 and 2, characterised by the fact that the control means (48) control a solenoid valve (52) controlling the arrival of cold water from the mains.

4. Apparatus according to one of Claims 1 and 2, characterised by the fact that the control means (48) control a water pump (58) connected to a water reservoir (54) kept at a constant level.

5. Apparatus according to one of Claims 1 to 4, characterised by the fact that the inner tube (24) and outer tube (26) are bent simultaneously.

## Patentansprüche

1. Vorrichtung zum Kühlen von Milch mit einer Pumpe (12) zum Zuführen der vom Melken kommenden Milch in einer Wärmetauscher (18), wo die Milch durch kaltes Wasser gekühlt wird, bevor sie in einem gekühlten Bottich (22) gesammelt wird, dadurch gekennzeichnet, daß

sie eine Rückschlagklappe (106) in der Milchzuführungsleitung (16) zum Wärmetauscher (18) aufweist,

dieser Wärmetauscher ein rohrförminger Tauscher mit einem spiralenförmig angeordneten und zum Umführen der Milch bestimmten Innenrohr (24) aus rostfreiem Stahl und einem um das Innenrohr angeordneten und zum Umführen des kalten Wassers im Zwischenraum der zwei Rohre bestimmten Außenrohr (26) aus biegsamen Kunststoff ist, wobei die Milch im Wärmetauscher von oben nach unten im Kreis geführt wird,

die vom Melken kommende Milch zuerst in einem oberhalb der Milchpumpe (12) angeordneten Umleergefäß (10) gesammelt wird und das Volumen an Milch des rohrförmigen Wärmetauschers (18) im wesentlichen dem Volumen an Milch im Umleergefäß (10) entspricht,

die Milchabsaugleitung (20) vom Wärmetauscher (18) zum gekülten Bottich (22) eine zur direkten Zuleitung aufgrund der Schwerkraft der gekühlten, am Boden des Wärmetauschers (18) abgezogenen Milch in den gekühlten Bottich (22) bestimmte absteigende Leitung ist, und

sie außerdem eine an der Milchzuführungsleitung (16) und oberhalb des Wärmetauschers angebrachte Luftzuführung (78) aufweist, welche sowohl in geschlossener Stellung zur Kühlung der Milch wie auch in geöffneter Stellung zum Entleeren des Wärmetauschers am Ende des Melkens und am Ende der Spülung sowie

zur vorübergehenden Regelung des Betriebes der Milchpumpe geeignete Kontrollvorrichtungen (42, 44, 48) und, während des Stillstandes der Milchpumpe (12) und des momentanen Stillstandes der Milch im Wärmetauscher (18) aufgrund des Vorhandenseins des Rückschlagventils (106) in der Zuleitung (16), wenigstens eine Kaltwassereinspritzung von unten nach oben im Wärmetauscher aufweist.

2. Vorrichtung nach Anspruch 1, dadurch gekennzeichnet, daß der Umleerbehälter (10) einen Detektor (42) eines hohen Spiegels und einen Detektor (44) eines niederen Spiegels, welche zur Regelung der Inbetriebsetzung bzw. zum Anhalten der Pumpe (12) geeignet sind, aufweist.

3. Vorrichtung nach einem der Ansprüche 1 und 2, dadurch gekennzeichnet, daß die Kontrollvorrichtungen (48) ein Elektroventil (52) steuern, welches den Zufluß kalten Wassers aus der Sektorleitung steuert.

4. Vorrichtung nach einem der Ansprüche 1 und 2, dadurch gekennzeichnet, daß die Kontrollvorrichtungen (48) eine mit einem auf konstantem Spiegel gehaltenen Wasservorrat verbundene Wasserpumpe (58) steuern.

5. Vorrichtung nach einem der Ansprüche 1 bis 4, dadurch gekennzeichnet, daß das Innenrohr (24) und das Außenrohr (26) gleichzeitig gebogen sind.

FIG 1

0 093 646

FIG. 2

FIG. 3

FIG. 4

FIG. 5

2

FIG_6

FIG_7

FIG_8

FIG_9